# EUROPÄISCHE PATENTSCHRIFT

(11) **EP 1 286 473 B1**
(45) Veröffentlichungstag und Bekanntmachung des Hinweises auf die Patenterteilung: **11.03.2009**
(21) Anmeldenummer: 02017550.1
(22) Anmeldetag: 06.08.2002
(51) Int. Cl.: H04B 1/16, H04B 15/00

(54) **Unterdrückung von Zündstörungen und anderer impulsartiger Störungen beim Rundfunkempfang**
Suppression of impulse noise in broadcast reception
Procédé pour supprimer des impulsions parasites lors de la réception radio

(30) Priorität: 09.08.2001 DE 10139248
(43) Veröffentlichungstag der Anmeldung: 26.02.2003
(73) Patentinhaber: Harman Becker Automotive Systems GmbH, 76307 Karlsbad (DE)
(72) Erfinder: Gierl, Stefan, Dr.-Ing., 76133 Karlsruhe (DE); Benz, Christoph, Dipl.-Ing. (FH), 77797 Ohlsbach (DE)
(74) Vertreter: Patentanwälte Westphal, Mussgnug & Partner

(56) Entgegenhaltungen:
- EP-A- 0 208 082
- DE-A- 4 445 983
- DE-A- 19 610 455
- US-A- 4 490 838
- US-A- 5 303 414
- US-A- 5 475 869

## Beschreibung

Verfahren zur Unterdrückung von Störungen im Empfangssignal eines Stereorundfunkempfängers sowie Stereorundfunkempfänger

Die Erfindung betrifft ein Verfahren zur Unterdrückung von Störungen im Empfangssignal eines Stereorundfunkempfängers, in welchem aus dem analogen Stereomultiplexsignal in einem Stereodecoder das digitale (L-R)-Signal und das digitale (L+R)-Signal sowie in einer Stereomatrix das digitale L-Signal und das digitale R-Signal erzeugt werden.

Die Erfindung betrifft weiter einen Sterorundfünkempfänger mit einer Empfangseinheit zur Erzeugung des analogen Stereomultiplexsignals, mit einem Stereodecoder zur Erzeugung des digitalen (L-R)-Signals und des digitalen (L+R)-Signals aus dem analogen Stereomultiplexsignal sowie mit einer Stereomatrix zur Erzeugung des digitalen L-Signals und des digitalen R-Signals aus dem (L-R)-Signal und dem (L+R)-Signal.

UKW-Rundfunksender senden das sogenannte Stereomultiplexsignal aus, das aus dem Audiomittensignal - auch Monosignal genannt - mit einer Frequenz bis zu 15 KHz, dem Stereopilotton mit einer Frequenz von 19 KHz und dem Stereosignal mit einer Frequenz von 23 KHz bis 53 KHz gebildet wird.

In einem Stereoempfänger wird in einer Empfangseinheit aus dem Empfangssignal das analoge Stereomultiplexsignal gewonnen und mittels eines Analog-Digital-Wandlers digitalisiert. Das digitale Stereomultiplexsignal wird in einem Stereodecoder verarbeitet, der aus dem digitalen Stereomultiplexsignal das (L-R)-Signal und das (L+R)-Signal erzeugt. Eine Stereomatrix berechnet durch Bildung der Summen- und Differenzsignale aus dem (L-R)-Signal und dem (L+R)-Signal das Audiosignal für den linken Kanal - das sogenannte L-Signal - und das Audiosignal für den rechten Kanal, das als R-Signal bezeichnet wird.

Im Gegensatz zu einem ortsfesten Stereorundfunkempfänger wird der Empfang bei einem mobilen z. B. in ein Kraftfahrzeug eingebauten Stereorundfunkempfänger durch unterschiedliche, teilweise sogar ungenügende Empfangsbedingungen infolge der Topografie des gerade befahrenen Geländes häufig gestört, beispielsweise durch Mehrwegeempfang oder bei Aufenthalt im Funkschatten. Neben diesen durch die Topografie des Geländes bedingten Empfangsstörungen verursacht die elektrische Anlage, insbesondere die Zündanlage, eines Kraftfahrzeuges zusätzlich Störimpulse im Empfangssignal des Stereorundfunkempfängers.

Als bekannte Verfahren zur Unterdrückung von Empfangsstörungen sind die Regelung der Kanaltrennung - das stufenlose Umblenden von Stereo- auf Monowiedergabe -, das sofortige Umschalten von Stereo- auf Monowiedergabe, der Einsatz von Tiefpässen sowie die Störaustastung zu nennen, bei welcher das Empfangssignal für eine vorgebbare Zeit stummgeschaltet wird.

Eine Störaustastung auf der Ebene des Stereomultiplexsignales zeigt sich bei der Unterdrückung von Störungen, die durch Mehrwegeempfang verursacht sind, als besonders wirkungsvoll, weil dadurch verhindert wird, dass sich Störimpulse bis zur Audioebene fortpflanzen. Die Störaustastung ist aber mit dem Nachteil behaftet, dass im Empfangssignal Lücken verursacht werden.

Die Umschaltung von Stereo- auf Monowiedergabe eignet sich besonders bei abnehmenden Empfangsfeldstärken, also bei zunehmenden Rauschanteilen, um die Empfangsqualität zu verbessern. Der Nachteil der Umschaltung von Stereo- auf Monowiedergabe liegt darin, dass auf ein stereophones Klangbild verzichtet werden muß.

Nadel- oder impulsförmige Störungen, die z. B. von der Zündanlage eines Kraftfahrzeuges verursacht werden, lassen sich mit Hilfe eines Tiefpasses weitgehend unterdrücken, wodurch jedoch das volle Klangbild beeinträchtigt wird.

Die US 5,303,414 beschreibt ein Verfahren, bei dem im Falle einer Störung das demodulierte Audiosignal durch seinen letzten gültigen Wert ersetzt wird. Zu diesem Zwecke wird eine Sample- und Holdschaltung verwendet.

Die EP 0 208 082 A2 beschreibt ein Rundfunkempfangsgerät bei dem die Abtastwerte des digitalen Audiosignals im Falle einer Störung unterdrückt und durch interpolierte Werte ersetzt werden.

Ein weiteres Verfahren zur Rausch- und Störpegelelimination ist aus der DE 196 10 455 A1 bekannt.

Es sind außerdem Verfahren bekannt, welche die Interpolation von Abtastwerten im Stereomultiplexsignal vorsehen, um einzelne Störimpulse zu unterdrücken. Diese Verfahren erfordern jedoch eine verhältnismäßig hohe Abtastrate, die einen hohen technischen Aufwand bedingt.

Es ist daher Aufgabe der Erfindung, ein Verfahren zur Unterdrückung von Störungen im Empfangssignal eines Stereorundfunkempfängers sowie einen Stereorundfunkempfänger so zu gestalten, dass bei Störungen im Empfangssignal mit verhältnismäßig geringem technischen Aufwand eine möglichst lang andauernde Stereowiedergabe erzielt wird.

Verfahrensmäßig wird diese Aufgabe mit den im Anspruch 1 angegebenen Merkmalen gelöst.

Schaltungsmäßig wird diese Aufgabe mit den im Anspruch 18 angegebenen Merkmalen gelöst.

Das erfindungsgemäße Verfahren sieht vor, im erfindungsgemäßen Stereorundfunkempfänger ein digitales Feldstärkesignal zu erzeugen, welches das analoge Feldstärkesignal repräsentiert. Dieses digitale Feldstärkesignal kann beispielsweise durch Digitalisieren des analogen Feldstärkesignals erzeugt werden. Es kann z. B. aber auch aus einem digitalen ZF-Signal der ZF-Stufe des Stereorundfunkempfängers abgeleitet werden. Eine dritte Alternative sieht vor, das digitale Feldstärkesignal aus dem Stereomultiplexsignal abzuleiten. Hierzu kann das Stereomultiplexsignal beispielsweise gemäß dem Spektralsubtraktionsverfahren analysiert werden. Es wird das Minimum der Leistungsdichte des gestörten Stereomultiplexsignals ermittelt. Aus dem Minimum der Leistungsdichte, welches das analoge Feldstärkesignal repräsentiert, wird das digitale Feldstärkesignal abgeleitet. Das Spektralsubtraktionsverfahren und die Ermittlung des Minimums der Leistungsdichte sind in DE 44 45 983 C2 beschrieben und erläutert.

Das erfindungsgemäße Verfahren sieht nun vor zu prüfen, ob das digitale Feldstärkesignal innerhalb oder außerhalb eines vorgebbaren Toleranzbereiches liegt. Das erfindungsgemäße Verfahren sieht weiter vor, die Abtastwerte des digitalen Audiosignales mindestens so lange durch Interpolation zu erzeugen, wie das digitale Feldstärkesignal außerhalb des vorgebbaren Toleranzbereiches liegt.

Der Toleranzbereich folgt den zeitlichen Änderungen der Empfangsfeldstärke.

Bei der Interpolation der Abtastwerte wird das digitale Audiosignal in mindestens einem Zwischenspeicher zwischengespeichert.

Beispielsweise werden das (L-R)-Signal und das (L+R)-Signal in je einem zwischen dem Stereodecoder und der Stereomatrix des Stereorundfunkempfängers liegenden Zwischenspeicher zwischengespeichert. Bei diesem Ausführungsbeispiel genügt es, nur die Abtastwerte des (L+R)-Signals zu interpolieren. Eine Interpolation der Abtastwerte des (L-R)-Signals ist nicht erforderlich.

Ein weiteres Ausführungsbeispiel sieht vor, das L-Signal und das R-Signal in je einem Zwischenspeicher hinter der Stereomatrix zwischenzuspeichern. Bei diesem Ausführungsbeispiel sind sowohl die Abtastwerte des L-Signals als auch des R-Signals zu interpolieren.

Ein weiteres Ausführungsbeispiel der Erfindung sieht vor, nicht nur die im durch den Toleranzbereich festgelegten Interpolationsintervall liegenden Abtastwerte des Audiosignales durch interpolierte Abtastwerte zu ersetzen, sondern auch eine vorgebbare Anzahl vor und/oder hinter dem Interpolationsintervall liegender Abtastwerte durch interpolierte Abtastwerte zu ersetzen. Diese Maßnahme zeichnet sich durch den Vorteil aus, dass Ein- und Ausschwingvorgänge bei der Interpolation berücksichtigt werden, wodurch das Klangbild verbessert wird. Außerdem werden durch diese Maßnahmen Ungenauigkeiten des Triggerzeitpunktes ausgeglichen.

Ein weiteres Ausführungsbeispiel der Erfindung ist mit einem Triggergenerator ausgestattet, der ein Triggersignal zur Markierung der durch interpolierte Abtastwerte zu ersetzenden gestörten Abtastwerte des Audiosignals erzeugt, wenn das digitale Feldstärkesignal außerhalb des Toleranzbereiches liegt. Die Dauer des Triggersignals bestimmt daher die Länge des Interpolationsintervalles.

Vorzugsweise wird die Interpolation mit Lagrange-Polynomen durchgeführt. Bei der Interpolation von M-Abtastwerten mit einem Lagrange-Polynom N-ten Grades werden (N+1)/2 Abtastwerte als Stützstellen vor und hinter dem Interpolationsintervall vorgesehen. Zur Unterdrückung von Störimpulsen, die von der Zündanlage eines Kraftfahrzeuges verursacht werden, sind für M beispielsweise Werte von 10 bis 20 und für N von 1 bis 3 besonders gut geeignet.

Zusätzlich zur Interpolation kann der Stereoempfänger mindestens während der Dauer des Interpolationsintervalls von Stereo- auf Monowiedergabe umgeschaltet werden. In diesem Fall sind nur die Abtastwerte des Monosignals zu interpolieren. Um wie bei der Interpolation Ein- und Ausschwingvorgänge weitgehend im Klangbild auszublenden, ist es sinnvoll, bereits vor dem Interpolationsintervall eine vorgebbare Zeitspanne den Stereorundfunkempfänger von Stereowiedergabe auf Monowiedergabe umzuschalten. Analog zu dieser Maßnahme wird am Ende des Interpolationsintervalls nicht sofort von Monowiedergabe auf Stereowiedergabe umgeschaltet; vielmehr erfolgt das Zurückschalten auf Stereowiedergabe mit einer vorgebbaren Zeitverzögerung.

Das erfindungsgemäße Verfahren und der erfindungsgemäße Stereorundfunkempfänger werden anhand der in den Figuren dargestellten Ausführungsbeispielen näher beschrieben und erläutert.

In der Zeichnung zeigen:
Figur 1:
   Einen die Empfangseinheit, den Stereodecoder und die Stereomatrix umfassenden Ausschnitt eines ersten Ausführungsbeispieles des erfindungsgemäßen Stereorundfunkempfängers,
Figur 2:
   einen entsprechenden Ausschnitt eines zweiten Ausführungsbeispieles,
Figur 3:
   einen entsprechenden Ausschnitt eines dritten Ausführungsbeispieles und
Figur 4:
   einen entsprechenden Ausschnitt eines vierten Ausführungsbeispieles des erfindungsgemäßen Stereoempfängers.

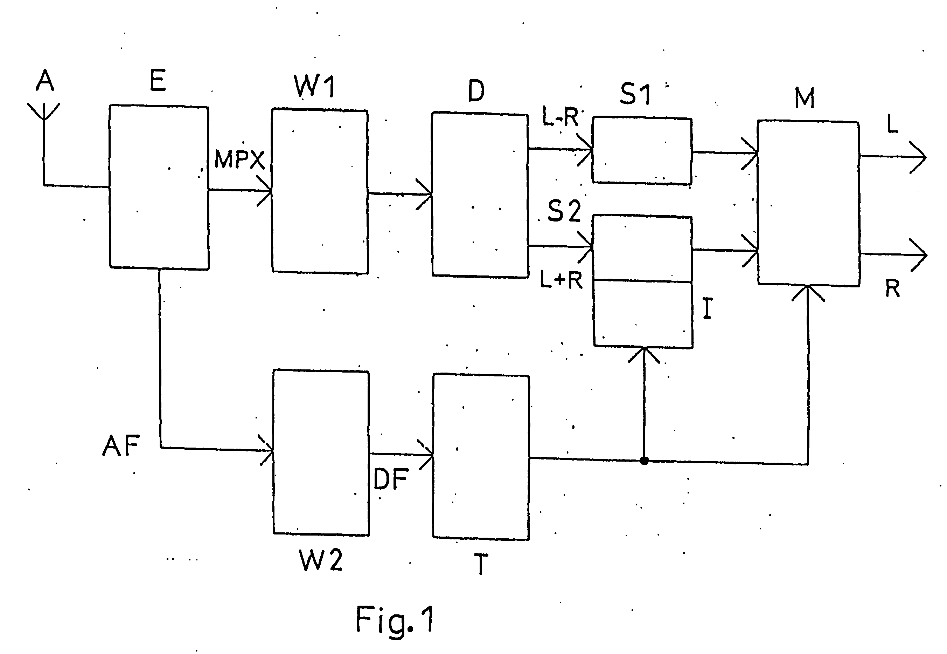

In der Figur 1 ist ein Ausschnitt eines ersten Ausführungsbeispieles des erfindungsgemäßen Stereorundfunkempfängers gezeigt, der die Empfangseinheit, den Stereodecoder und die Stereomatrix des Stereorundfunkempfängers umfaßt.

Das Empfangssignal liegt am Antenneingang A der Empfangseinheit E. Der Ausgang der Empfangseinheit E, an welchem das in der Empfangseinheit E gewonnene Stereomultiplexsignal MPX abnehmbar ist, ist mit dem Eingang eines ersten Analog-Digital-Wandlers W1 verbunden, während der Ausgang der Empfangseinheit E, an welchem das analoge Feldstärkesignal AF abgreifbar ist, an den Eingang eines zweiten Analog-Digital-Wandlers W2 angeschlossen ist. Der Ausgang des ersten Analog-Digital-Wandlers W1 ist mit dem Eingang des Stereodecoders D verbunden, dessen erster Ausgang, an welchem das (L-R)-Signal abreifbar ist, mit dem Eingang eines ersten Zwischenspeichers S1 verbunden ist, während der zweite Ausgang des Stereodecoders D, an welchem das (L+R)-Signal abnehmbar ist an den Eingang eines zweiten Zwischenspeichers S2 angeschlossen ist. Der Ausgang des ersten Zwischenspeichers S1 und des zweiten Zwischenspeichers S2 ist mit je einem Eingang der Stereomatrix M verbunden, an deren einem Ausgang das L-Signal und an deren anderem Ausgang das R-Signal abnehmbar ist. Der Ausgang des zweiten Analog-Digital-Wandlers W2 ist mit dem Eingang eines Triggergenerators T verbunden, dessen Ausgang mit dem Steuereingang der Stereomatrix M und einer mit dem zweiten Zwischenspeicher S2 verbundenen Interpolationseinheit I verbunden ist.

In der Empfangseinheit E wird aus dem am Antenneneingang A liegenden Empfangssignal das analoge Stereomultiplexsignal MPX gewonnen, das mittels des Analog-Digital-Wandlers W1 digitalisiert wird. Der Stereodecoder D erzeugt aus dem vom Analog-Digital-Wandler W1 gelieferten digitalen Stereomultiplexsignal das digitale (L-R)-Signal, das im Zwischenspeicher (S1) zwischengespeichert wird, und das (L+R)-Signal, das im Zwischenspeicher S2 zwischengespeichert wird. Der Analog-Digital-Wandler W2 digitalisiert das von der Empfangseinheit (E) empfangene analoge Feldstärkesignal AF. Das vom Analog-Digital-Wandler W2 erzeugte digitale Feldstärkesignal DF steuert den Triggergenerator T, der ein Triggersignal an den Steuereingang der Stereomatrix M und der mit dem Zwischenspeicher S2 verbundenen Interpolationseinheit I sendet, wenn das digitale Feldstärkesignal DF außerhalb des vorgebbaren Toleranzbereiches liegt. Dadurch werden die durch interpolierte Abtastwerte zu ersetzenden Abtastwerte des (L+R)-Signals markiert. Während des durch das digitale Feldstärkesignal und den vorgebbaren Toleranzbereich definierten Interpolationsintervalls ersetzt die Interpolationseinheit I die Abtastwerte des (L+R)-Signals durch interpolierte Abtastwerte. In der Stereomatrix M werden aus den vom Zwischenspeicher S1 gelieferten Abtastwerten des (L-R)-Signals und der vom Zwischenspeicher S2 gelieferten Abtastwerte des (L+R)-Signals durch Summen- und Differenzbildung die Abtastwerte des L-Signals und des R-Signals berechnet. Diese beiden Signale - das L-Signal und das R-Signal - werden an den beiden Ausgängen der Stereomatrix M abgenommen.

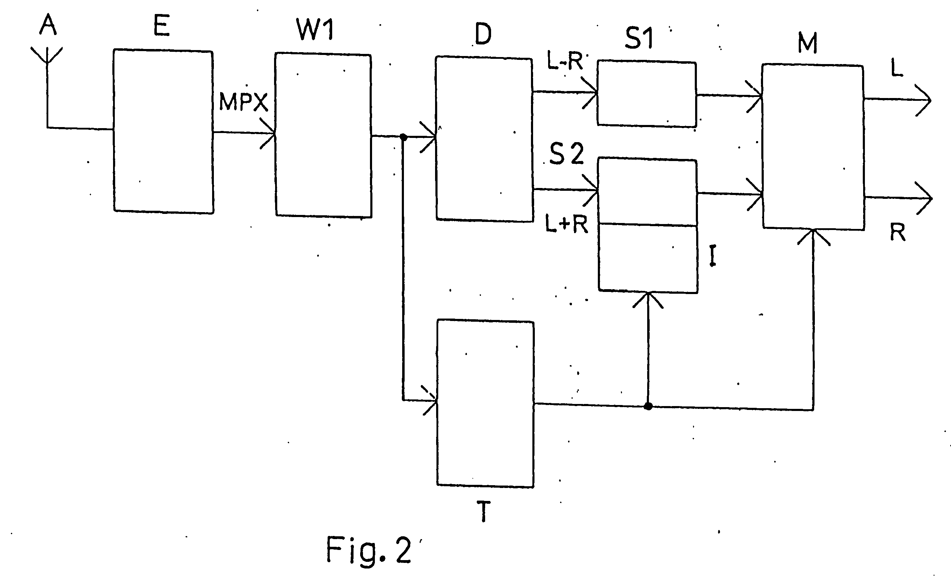

Das in der Figur 2 abgebildete zweite Ausführungsbeispiel unterscheidet sich vom ersten dadurch, dass der Ausgang des ersten Analog-Digital-Wandlers W1 nicht nur mit dem Eingang des Stereodecoders D sondern auch mit dem Eingang des Triggergenerators T verbunden ist, während der zweite Analog-Digital-Wandler entfällt. Beim zweiten Ausführungsbeispiel dient das digitale Stereomultiplexsignal als digitales Feldstärkesignal, weil es das analoge Feldstärkesignal wiedergibt. Die Funktion des zweiten Ausführungsbeispieles entspricht der des ersten Ausführungsbeispieles. Ein Vorteil des ersten und des zweiten Ausführungsbeispieles ist darin zu sehen, dass nur die Abtastwerte des (L+R)-Signals zu interpolieren sind.

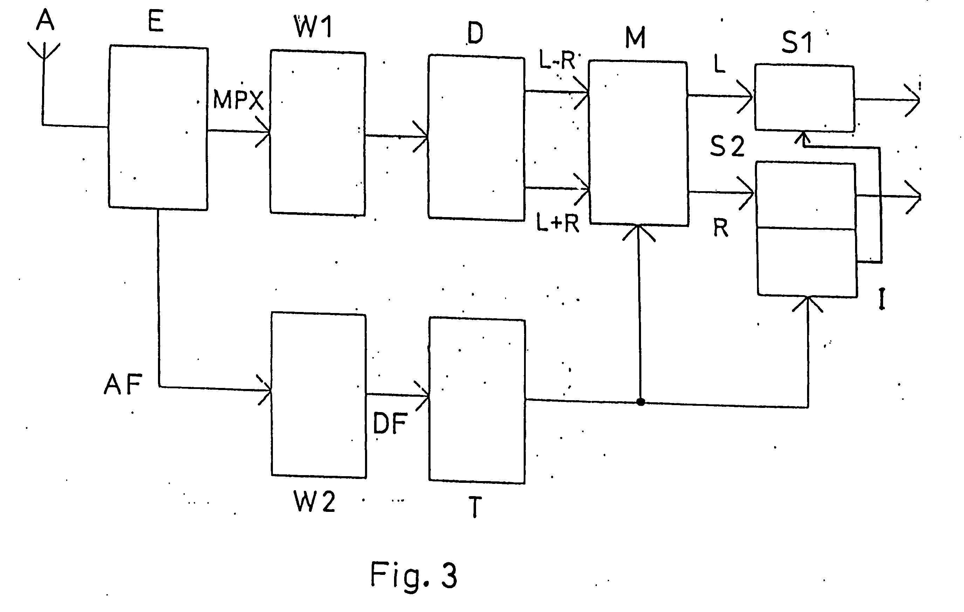

Das in der Figur 3 abgebildete dritte Ausführungsbeispiel unterscheidet sich vom ersten dadurch, dass die beiden Zwischenspeicher S1 und S2 sowie die Interpolationseinheit I nicht mehr zwischen dem Stereodecoder D und der Stereomatrix M, sondern nach der Stereomatrix M angeordnet sind. Im Zwischenspeicher S1 werden daher die Abtastwerte des L-Signals zwischengespeichert, während im Zwischenspeicher S2 die Abtastwerte des R-Signals zwischengespeichert werden. Während des Interpolationsintervalls ersetzt die Interpolationseinheit I die Abtastwerte des L-Signals und des R-Signals durch interpolierte Abtastwerte.

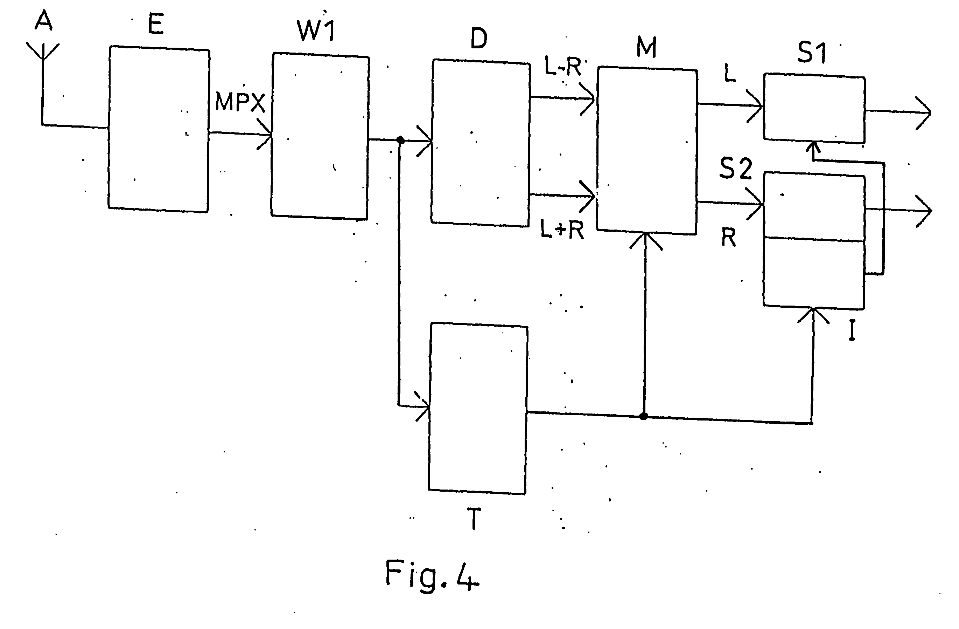

Das in der Figur 4 abgebildete vierte Ausführungsbeispiel unterscheidet sich vom dritten dadurch, dass der Ausgang des ersten Analog-Digital-Wandlers W1 auch mit dem Eingang des Triggergenerators T verbunden ist. Der zweite Analog-Digital-Wandler W2 entfällt, denn er ist nicht mehr erforderlich, weil das digitalisierte Stereomultiplexsignal als digitales Feldstärkesignal DF dient.

Das erfindungsgemäße Verfahren ist allgemein zur Unterdrückung von Störungen im Empfangssignal eines Stereorundfunkempfängers geeignet. Insbesondere aber lassen sich mit dem erfindungsgemäßen Verfahren impulsartige Störungen, wie sie z. B. von der Zündanlage eines Kraftfahrzeuges verursacht werden, wirkungsvoll unterdrücken. Ein wesentlicher Vorteil des erfindungsgemäßen Verfahrens und des erfindungsgemäßen Stereorundfunkempfängers zeigt sich darin, dass die Umschaltung von Stereowiedergabe auf Monowiedergabe erst bei wesentlich stärkeren Störungen im Empfangssignal erfolgt als bei den bekannten Verfahren und Stereorundfunkempfängern.

### Bezugszeichenliste

- A: Antenneingang
- AF: Analoges Feldstärkesignal
- D: Stereodecoder
- DF: Digitales Feldstärkesignal
- E: Empfangseinheit
- I: Interpolationseinheit
- L: L-Signal
- L+R: (L+R)-Signal
- L-R: (L-R)-Signal
- R: R-Signal
- S1: Zwischenspeicher
- S2: Zwischenspeicher
- T: Triggergenerator
- W1: Analog-Digital-Wandler
- W2: Analog-Digital-Wandler

## Patentansprüche

1. Verfahren zur Unterdrückung von Störungen im Empfangssignal eines Stereorundfunkempfängers, wobei bei dem Verfahren aus einem analogen Stereomultiplexsignal (MPX) in einem Stereodecoder (D) ein digitales L-R-Signal und ein digitales L+R-Signal sowie in einer Stereomatrix (M) ein digitales L-Signal und ein digitales R-Signal erzeugt werden, ein ein analoges Feldstärkesignal (AF) repräsentierendes digitales Feldstärkesignal (DF) erzeugt wird und wobei die Abtastwerte des digitalen Audiosignales mindestens so lange durch Interpolation aus den zuvor gespeicherten Abtastwerten des digitalen Audiosignals erzeugt werden, wie das digitale Feldstärkesignal (DF) außerhalb eines vorgebbaren Toleranzbereiches liegt,
**dadurch gekennzeichnet, dass** durch zeitliche Mittelung des analogen oder digitalen Feldstärkesignals (AF, DF) eine mittlere Feldstärke ermittelt wird, durch welche die Lage des Toleranzbereiches festgelegt wird.

2. Verfahren nach Anspruch 1,
**dadurch gekennzeichnet, dass** das digitale Feldstärkesignal (DF) durch Digitalisieren des analogen Feldstärkesignals (AF) erzeugt wird.

3. Verfahren nach Anspruch 1,
**dadurch gekennzeichnet, dass** das digitale Feldstärkesignal (DF) aus einem digitalen ZF-Signal der ZF-Stufe des Stereorundfunkempfängers erzeugt wird.

4. Verfahren nach Anspruch 1,
**dadurch gekennzeichnet, dass** das digitale Feldstärkesignal (DF) aus dem Stereomultiplexsignal (MPX) abgeleitet wird.

5. Verfahren nach einem der Ansprüche 1 bis 4,
**dadurch gekennzeichnet, dass** das digitale Audiosignal in mindestens einem Zwischenspeicher (S1, S2) zwischengespeichert wird.

6. Verfahren nach Anspruch 5,
**dadurch gekennzeichnet, dass** das L-R-signal und das L+R-Signal in je einem zwischen dem Stereodecoder (D) und der Stereomatrix (M) liegenden Zwischenspeicher (S1, S2) oder das L-Signal und das R-Signal in je einem hinter der Stereomatrix (M) liegenden Zwischenspeicher (S1, S2) zwischengespeichert werden.

7. Verfahren nach einem der Ansprüche 1 bis 6,
**dadurch gekennzeichnet, dass** eine vorgebbare Anzahl vor und/oder hinter dem durch den Toleranzbereich festgelegten Interpolationsintervall liegender Abtastwerte des Audiosignales ebenfalls durch interpolierte Abtastwerte ersetzt werden.

8. Verfahren nach einem der Ansprüche 1 bis 7,
**dadurch gekennzeichnet, dass** ein Triggergenerator (T) ein Triggersignal zur Markierung der durch interpolierte Abtastwerte zu ersetzenden gestörten Abtastwerte des Audiosignales erzeugt, wenn das digitale Feldstärkesignal (DF) außerhalb des Toleranzbereiches liegt.

9. Verfahren nach einem der Ansprüche 1 bis 8,
**dadurch gekennzeichnet, dass** die Dauer des Triggersignals die Länge des Interpolationsintervalls bestimmt.

10. Verfahren nach einem der Ansprüche 1 bis 9,
**dadurch gekennzeichnet, dass** die Interpolation mit Lagrange-Polynomen durchgeführt wird.

11. Verfahren nach Anspruch 10,
**dadurch gekennzeichnet, dass** bei der Interpolation von M-Abtastwerten mit einem Polynom N-ten Grades (N+1)/2 Abtastwerte als Stützstellen vor und hinter dem Interpolationsintervall vorgesehen werden.

12. Verfahren nach einem der Ansprüche 1 bis 11,
**dadurch gekennzeichnet, dass** das L-R-signal sowie das L+R-Signal zwischengespeichert werden und dass das L+R-Signal und/oder L-R-signal interpoliert werden.

13. Verfahren nach einem der Ansprüche 1 bis 11,
**dadurch gekennzeichnet, dass** das L-Signal und das R-Signal zwischengepeichert und interpoliert werden.

14. Verfahren nach einem der Ansprüche 1 bis 11,
**dadurch gekennzeichnet, dass** der Stereoempfänger mindestens während der Dauer des Interpolationsintervalls von Stereo- auf Monowiedergabe umgeschaltet wird.

15. Verfahren nach Anspruch 14,
**dadurch gekennzeichnet, dass** der Stereoempfänger eine vorgebbare vor-/ oder hinter dem Interpolationsintervall liegende Zeitspanne lang ebenfalls auf Monowiedergabe geschaltet wird.

16. Verfahren nach Anspruch 14 oder 15,
**dadurch gekennzeichnet, dass** die Umschaltung von Mono- auf Stereowiedergabe mit einer zeitlichen Verzögerung erfolgt.

17. Stereorundfunkempfänger mit
- einer Empfangseinheit (E) zur Erzeugung eines analogen Stereomultiplexsignales (MPX), mit
- einem Stereodecoder (D) zur Erzeugung eines digitalen L-R-Signales und des digitalen L+R-Signales aus dem analogen Stereomultiplexsignal (MPX), mit
- einer Stereomatrix (M) zur Erzeugung eines digitalen L-Signales und eines digitalen R-Signales aus dem L-R - Signal und dem L+R-Signal, mit
- Mittel zum Erzeugen eines ein analoges Feldstärkesignal (AF) repräsentierendes digitales Feldstärkesignals (DF), so dass die Abtastwerte des digitalen Audiosignales mindestens so lange durch Interpolation erzeugbar sind, wie das digitale Feldstärkesignal (DF) außerhalb eines vorgebbaren Toleranzbereiches liegt,
**dadurch gekennzeichnet, dass** die Lage des Toleranzbereiches durch eine durch zeitliche Mittelung des analogen oder digitalen Feldstärkesignals (AF, DF) ermittelte mittlere Feldstärke festgelegt ist.

18. Stereorundfunkempfänger nach Anspruch 17,
der zusätzlich einen Analog-Digital-Wandler zum Erzeugen des digitalen Feldstärkesignals (DF) durch Digitalisieren des analogen Feldstärkesignals (AF) aufweist.

19. Stereorundfunkempfänger nach Anspruch 17, bei dem eine Erzeugung des digitalen Feldstärkesignals (DF) aus einem digitalen ZF-Signal der ZF-Stufe des Stereorundfunkempfängers vorgesehen ist.

20. Stereorundfunkempfänger nach Anspruch 17, bei dem eine Erzeugung des digitalen Feldstärkesignals (DF) aus dem Stereomultiplexsignal (MPX) vorgesehen ist.

21. Stereorundfunkempfänger nach einem der Ansprüche 17 bis 20, wobei eine Zwischenspeicherung des digitalen Audiosignals in mindestens einem Zwischenspeicher (S1, S2) vorgesehen ist.

22. Stereorundfunkempfänger nach Anspruch 21, bei dem eine Zwischenspeicherung des L-R-Signals und des L+R-Signals in je einem zwischen dem Stereodecoder (D) und der Stereomatrix (M) liegenden Zwischenspeicher (S1, S2) oder eine Zwischenspeicherung des L-Signals und das R-Signals in je einem hinter der Stereomatrix (M) angeordneten Zwischenspeicher (S1, S2) vorgesehen ist.

23. Stereorundfunkempfänger nach einem der Ansprüche 17 bis 22, bei dem die Ersetzung durch interpolierte Abtastwerte einer Anzahl vor und/oder hinter dem durch den Toleranzbereich festgelegten Interpolationsintervall liegender Abtastwerte des Audiosignales vorgesehen ist.

24. Stereorundfunkempfänger nach einem der Ansprüche 17 bis 23,
**dadurch gekennzeichnet, dass** ein Triggergenerator (D) zur Erzeugung eines Triggersignales vorgesehen ist, das zur Markierung der durch interpolierte Abtastwerte zu ersetzenden Abtastwerte des Audiosignals vorgesehen ist, wenn das digitale Feldstärkesignal (DF) außerhalb des Toleranzbereiches liegt.

25. Stereorundfunkempfänger nach einem der Ansprüche 17 bis 24, bei dem die Bestimmung der Länge des Interpolationsintervalls durch die Dauer des Triggersignals die vorgesehen ist.

26. Stereorundfunkempfänger nach einem der Ansprüche 17 bis 25, bei dem die Durchführung der Interpolation mit Lagrange-Polynomen erfolgt.

27. Stereorundfunkempfänger nach Anspruch 26,
**dadurch gekennzeichnet, dass** bei der Interpolation von M-Abstastwerten mit einem Polynom N-ten Grades (N+1)/2 Abtastwerte als Stützstellen vor und hinter dem Interpolationsintervall vorgesehen sind.

28. Stereorundfunkempfänger nach einem der Ansprüche 17 bis 27, bei dem eine Zwischenspeicherungdes L-R-Signals sowie des L+R-Signals und eine Interpolation des (L+R)-Signals und/oder des L-R-Signals vorgesehen sind.

29. Stereorundfunkempfänger nach einem der Ansprüche 17 bis 27, bei dem eine Zwischenspeicherung und eine Interpolationdes L-Signals und des R-Signals vorgesehen sind.

30. Stereorundfunkempfänger nach einem der Ansprüche 17 bis 27, bei dem mindestens während der Dauer des Interpolationsintervalls eine Umschaltung des Stereoempfängers von Stereo- auf Monowiedergabe vorgesehen ist.

31. Stereorundfunkempfänger nach Anspruch 30, bei dem eine Umschaltung des Stereoempfängers auf Monowiedergabe eine vorgebbare vor und/oder nach dem Interpolationsintervall liegende Zeitspanne lang vorgesehen ist.

32. Stereorundfunkempfänger nach Anspruch 30 oder 31,
**dadurch gekennzeichnet, dass** die Umschaltung von Mono- auf Stereowiedergabe mit einer zeitlichen Verzögerung vorgesehen ist.

33. Stereorundfunkempfänger nach einem der Ansprüche 17 bis 28 oder 30 bis 32,
**dadurch gekennzeichnet, dass** das Empfangssignal am Antenneneingang (A) einer Empfangseinheit (E) liegt, deren erster Ausgang, an welchem das Stereomultiplexsignal (MPX) abgreifbar ist, mit dem Eingang eines ersten Analog-Digital-Wandlers (W1) verbunden ist, und deren zweiter Ausgang, an welchem das analoge Feldstärkesignal (AF) abgreifbar ist, mit dem Eingang eines zweiten Analog-Digital-Wandlers (W2) verbunden ist, dass der Ausgang des ersten Analog-Digital-Wandlers (W1 mit dem Eingang des Stereodecoders (D) verbunden ist, dessen erster Ausgang, an welchem das L-R-Signal abgreifbar ist, mit dem Eingang eines ersten Zwischenspeichers (S1) verbunden ist, während dessen zweiter Ausgang, an welchem das L+R-Signal abgreifbar ist, mit dem Eingang eines zweiten Zwischenspeichers (S2) verbunden ist, dass der Ausgang des ersten und des zweiten Zwischenspeichers (S1, S2) mit den beiden Audioeingängen der Stereomatrix (M) verbunden sind, an deren Ausgängen das L-Signal und das R-Signal abnehmbar sind, dass der Ausgang des zweiten Analog-Digital-Wandlers (W2) mit dem Eingang eines Triggergenerators (T) verbunden ist und dass der Ausgang des Triggergenerators (T) mit dem Steuereingang der Stereomatrix (M) und einer mit dem zweiten Zwischenspeicher (S2) verbundenen Interpolationseinheit (I) verbunden ist.

34. Stereoempfänger nach einem der Ansprüche 17 bis 28 oder 30 bis 32,
**dadurch gekennzeichnet, dass** das Empfangssignal am Antenneneingang (A) einer Empfangseinheit (E) liegt, deren Ausgang, an welchem das Stereomultiplexsignal (MPX) abgreifbar ist, mit dem Eingang eines Analog-Digital-Wandlers (W1) verbunden ist, dessen Ausgang mit dem Eingang eines Triggergenerators (T) und dem Eingang des Stereodecoders (D) verbunden ist, dessen erster Ausgang, an welchem das L-R-Signal abgreifbar ist, mit dem Eingang eines ersten Zwischenspeichers (S1) verbunden ist, während dessen zweiter Ausgang, an welchem das L+R-Signal abgreifbar ist, mit dem Eingang eines zweiten Zwischenspeichers (S2) verbunden ist, dass der Ausgang des ersten und des zweiten Zwischenspeichers (S1, S2) mit den beiden Audioeingängen der Stereomatrix (M) verbunden sind, an deren Ausgängen das L-Signal und das R-Signal abnehmbar sind, und dass der Ausgang des Triggergenerators (T) mit dem Steuereingang der Stereomatrix (M) und einer mit dem zweiten Zwischenspeicher (S2) verbundenen Interpolationseinheit (I) verbunden ist.

35. Stereorundfunkempfänger nach einem der Ansprüche 17 bis 27 oder 29 bis 32,
**dadurch gekennzeichnet, dass** das Empfangssignal am Antenneneingang (A) einer Empfangseinheit (E) liegt, deren erster Ausgang, an welchem das Stereomultiplexsignal (MPX) abgreifbar ist, mit dem Eingang eines ersten Analog-Digital-Wandlers (W1) verbunden ist, und deren zweiter Ausgang, an welchem das analoge Feldstärkesignal (AF) abgreifbar ist, mit dem Eingang eines zweiten Analog-Digital-Wandlers (W2) verbunden ist, dass der Ausgang des ersten Analog-Digital-Wandlers (W1) mit dem Eingang des Stereodecoders (D) verbunden ist, dessen erster Ausgang, an welchem das L-R-Signal abgreifbar ist mit dem ersten Audioeingang der Stereomatrix (M) verbunden ist, während dessen zweiter Ausgang, an welchem das L+R-Signal abgreifbar ist, mit dem zweiten Audioeingang der Stereomatrix (M) verbunden ist, dass der Ausgang des zweiten Analog-Digital-Wandlers (W2), an welchem das digitale Feldstärkesignal (DF) abgreifbar ist, mit dem Eingang eines Triggergenerators (T) verbunden ist, dessen Ausgang mit dem Steuereingang der Stereomatrix (M) und dem Steuereingang einer mit einem ersten Zwischenspeicher (S1) und einem zweiten Zwischenspeicher (S2) verbundenen Interpolationseinheit (I) verbunden ist, und dass der erste Ausgang der Stereomatrix (M), an welchem das L-Signal abnehmbar ist, mit dem Eingang des ersten Zwischenspeichers (S1) und der zweite Ausgang der Stereomatrix (M), an welchem das R-Signal abnehmbar ist, mit dem Eingang des zweiten Zwischenspeichers (S2) verbunden ist.

36. Stereorundfunkempfänger nach einem der Ansprüche 17 bis 27 oder 29 bis 32,
**dadurch gekennzeichnet, dass** das Empfangssignal am Antenneneingang (A) einer Empfangseinheit (E) liegt, deren Ausgang, an welchem das Stereomultiplexsignal (MPX) abgreifbar ist, mit dem Eingang eines Analog-Digital-Wandlers (W1) verbunden ist, dessen Ausgang mit dem Eingang eines Triggergenerators (T) und des Stereodecoders (D) verbunden ist, dessen erster Ausgang, an welchem das L-R-Signal abgreifbar ist, mit dem ersten Audioeingang der Stereomatrix (M) verbunden ist, während dessen zweiter Ausgang, an welchem das L+R-Signal abgreifbar ist, mit dem zweiten Audioeingang der Stereomatrix (M) verbunden ist, dass der Ausgang des Triggergenerators (T) mit dem Steuereingang der Stereomatrix (M) und einer mit einem ersten Zwischenspeicher (S1) und einem zweiten Zwischenspeicher (S2) verbundenen Interpolationseinheit (I) verbunden ist, dass der erste Ausgang der Stereomatrix (M), an welchem das L-Signal abgreifbar ist, mit dem Eingang des ersten Zwischenspeichers (S1) verbunden ist und dass der zweite Ausgang der Stereomatrix, an welchem das R-Signal abgreifbar ist, mit dem Eingang des zweiten Zwischenspeichers (S2) verbunden ist.

## Claims

1. Method of suppression of interference in the received signal of a stereo radio receiver, wherein a digital L-R signal and a digital L+R signal are produced in a stereo decoder from an analogue stereo multiplex signal (MPX) and a digital L signal and a digital R signal are produced in a stereo matrix (M), a digital field strength signal (DF) representing an analogue field strength signal (AF) is produced, and wherein the sampled values of the digital audio signal are produced from the previously stored sampled values of the digital audio signal by interpolation for at least as long as the digital field strength signal (DF) is outside a predeterminable range of tolerance, **characterised in that** an average field strength by which the position of the range of tolerance range is fixed is determined by time averaging of the analogue or digital field strength signal (AF, DF).

2. Method as claimed in Claim 1, **characterised in that** the digital field strength signal (DF) is produced by digitising the analogue field strength signal (AF).

3. Method as claimed in Claim 1, **characterised in that** the digital field strength signal (DF) is produced from a digital IF signal from the IF stage of the stereo radio receiver.

4. Method as claimed in Claim 1, **characterised in that** the digital field strength signal (DF) is derived from the stereo multiplex signal (MPX).

5. Method as claimed in any one of Claims 1 to 4, **characterized in that** the digital audio signal is buffered in at least one intermediate memory (S1, S2).

6. Method as claimed in Claim 5, **characterised in that** the L-R signal and the L+R signal are each stored temporarily in a buffer memory (S1, S2) located between the stereo decoder (D) and the stereo matrix (M) or the L signal and the R signal are each stored temporarily in a buffer memory (S1, S2) located behind the stereo matrix (M).

7. Method as claimed in any one of Claims 1 to 6, **characterised in that** a predeterminable number of sampled values of the audio signal located before and/or after the interpolation interval fixed by the range of tolerance are also replaced by interpolated sampled values.

8. Method as claimed in any one of Claims 1 to 7, **characterised in that** a trigger generator (T) produces a trigger signal for marking of the disturbed sampled values of the audio signal to be replaced by interpolated sampled values when the digital field strength signal (DF) is outside the range of tolerance.

9. Method as claimed in any one of Claims 1 to 8, **characterised in that** the duration of the trigger signal determines the length of the interpolation interval.

10. Method as claimed in any one of Claims 1 to 9, **characterised in that** the interpolation is carried out with Lagrange polynomials.

11. Method as claimed in Claim 10, **characterised in that** in the interpolation of M sampled values with a polynomial of the Nth degree (N+1)/2 sampled values are provided as support points before and after the interpolation interval.

12. Method as claimed in any one of Claims 1 to 11, **characterised in that** the L-R signal and the L+R signal are temporarily stored and that the L+R signal and/or the L-R signal are interpolated.

13. Method as claimed in any one of Claims 1 to 11, **characterised in that** the L signal and the R signal are buffered and interpolated.

14. Method as claimed in any one of Claims 1 to 11, **characterised in that** the stereo receiver is switched from stereo to mono reproduction at least for the duration of the interpolation interval.

15. Method as claimed in Claim 14, **characterised in that** the stereo receiver is likewise switched to mono reproduction for a predeterminable period of time before or after the interpolation interval.

16. Method as claimed in Claim 14 or Claim 15, **characterised in that** the switchover from mono to stereo reproduction takes place with a time delay.

17. Stereo radio receiver with
- a receiver unit (E) for the production of an analogue stereo multiplex signal (MPX), with
- a stereo decoder (D) for the production of a digital L-R signal and the digital L+R signal from the analogue stereo multiplex signal (MPX), with
- a stereo matrix (M) for the production of a digital L signal and a digital R signal from the L-R signal and the L+R signal, with
- means for the production of a digital field strength signal (DF) representing an analogue field strength signal (AF), so that the sampled values of the digital audio signal can be produced by interpolation for at least as long as the digital field strength signal (DF) is outside a predeterminable range of tolerance,
**characterised in that** the an average field strength by which the position of the range of tolerance range is fixed is determined by time averaging of the analogue or digital field strength signal (AF, DF).

18. Stereo radio receiver as claimed in Claim 17, which additionally has an analogue/digital converter for the production of the digital field strength signal (DF) by digitisation of the analogue field strength signal (AF).

19. Stereo radio receiver as claimed in Claim 17, wherein the digital field strength signal (DF) is produced from a digital IF signal from the IF stage of the stereo radio receiver.

20. Stereo radio receiver as claimed in Claim 17, wherein the digital field strength signal (DF) is produced from the stereo multiplex signal (MPX).

21. Stereo radio receiver as claimed in any one of Claims 17 to 20, wherein the digital audio signal is temporarily stored in at least one buffer memory (S1, S2).

22. Stereo radio receiver as claimed in Claim 21, wherein the L-R signal and the L+R signal can each be temporarily stored in a buffer memory (S1, S2) located between the stereo decoder (D) and the stereo matrix (M) or the L signal and the R signal can each be temporarily stored in a buffer memory (S1, S2) located after the stereo matrix (M).

23. Stereo radio receiver as claimed in any one of Claims 17 to 22, wherein a plurality of sampled values of the audio signal located before and/or after the interpolation interval fixed by the range of tolerance can be replaced by interpolated sampled values.

24. Stereo radio receiver as claimed in any one of Claims 17 to 23, **characterised in that** a trigger generator (D) s provided for producing a trigger signal which is provided for marking of the sampled values of the audio signal to be replaced by interpolated sampled values when the digital field strength signal (DF) is outside the range of tolerance.

25. Stereo radio receiver as claimed in any one of Claims 17 to 24, wherein the duration of the trigger signal determines the length of the interpolation interval.

26. Stereo radio receiver as claimed in any one of Claims 17 to 25, wherein the interpolation is carried out with Lagrange polynomials.

27. Stereo radio receiver as claimed in Claim 26, **characterized in that** in the interpolation of M sampled values with a polynomial of the Nth degree (N+1)/2 sampled values are provided as support points before and after the interpolation interval.

28. Stereo radio receiver as claimed in any one of Claims 17 to 27, wherein the L-R signal and the L+R signal can be temporarily stored and the L+R signal and/or the L-R signal can be interpolated.

29. Stereo radio receiver as claimed in any one of Claims 17 to 27, wherein the L signal and the R signal can be temporarily stored and interpolated.

30. Stereo radio receiver as claimed in any one of Claims 17 to 27, wherein the stereo receiver can be switched over from stereo to mono reproduction at least for the duration of the interpolation interval.

31. Stereo radio receiver as claimed in Claim 30, wherein the stereo receiver can be switched over to mono reproduction for a predeterminable period of time before and/or after the interpolation interval.

32. Stereo radio receiver as claimed in Claim 30 or 31, **characterised in that** the switchover from mono to stereo reproduction takes place with a time delay.

33. Stereo radio receiver as claimed in any one of Claims 17 to 28 or 30 to 32, **characterised in that** the received signal is present at the antenna input (A) of a receiver unit (E) of which the first output at which the stereo multiplex signal can be tapped is connected to the input of a first analogue/digital converter and the second output at which the analogue field strength signal (AF) can be tapped is connected to the input of a second analogue/digital converter, that the output of the first analogue/digital converter is connected to the input of the stereo decoder (D), of which the first output at which the L-R signal can be tapped is connected to the input of a first buffer memory (S1), whilst the second output thereof at which the L+R signal can be tapped is connected to the input of a second buffer memory, that the outputs of the first and second buffer memories (S1, S2) are connected to the two audio inputs of the stereo matrix (M) at the outputs of which the L signal and the R signal can be tapped, that the output of the second analogue-digital converter (W2) is connected to the input of a trigger generator (T), and that the output of trigger generator (T) is connected to the control input of the stereo matrix (M) and to an interpolation unit (1) connected to the second buffer memory (S2).

34. Stereo radio receiver as claimed in any one of Claims 17 to 28 or 30 to 32, **characterised in that** the received signal is present at the antenna input (A) of a receiver unit (E) of which the output at which the stereo multiplex signal (MPX) can be tapped is connected to the input of an analogue-digital converter (W1) of which the output is connected to the input of a trigger generator (T) and the input of the stereo decoder (D) at the first output of which the L-R signal can be tapped is connected to the input of a first buffer memory (S1), while the second output thereof at which the L+R signal can be tapped is connected to the input of a second buffer memory (S2), that the outputs of the first and the second buffer memories (S1, S2) are connected to the two audio inputs of the stereo matrix (M) at the outputs of which the L signal and the R signal can be tapped, and that the output of the trigger generator (T) is connected to the control input of the stereo matrix (M) and an interpolation unit (I) connected to the second buffer memory (S2).

35. Stereo radio receiver as claimed in any one of Claims 17 to 27 or 29 to 32, **characterised in that** the received signal is present at the antenna input (A) of a receiver unit (E) of which the first output at which the stereo multiplex signal (MPX) can be tapped is connected to the input of a first analogue-digital converter (W1), and of which the second output at which the analogue field strength signal (AF) can be tapped is connected to the input of a second analogue-digital converter (W2), that the output of first analogue-digital converter (W1) is connected to the input of the stereo decoder (D) the first output of which at which the L-R signal can be tapped is connected to the first audio input of the stereo matrix (M), whilst the second output thereof at which the L+R signal can be tapped is connected to the second audio input of the stereo matrix (M), that the output of the second analogue-digital converter (W2) at which the digital field strength signal (DF) can be tapped is connected to the input of a trigger generator (T) the output of which is connected to the control input of the stereo matrix (M) and the control input of an interpolation unit (I) connected to a first buffer memory (S1) and a second buffer memory (S2), and that the first output of the stereo matrix (M) at which the L signal can be tapped is connected to the input of first buffer memory (S1) and the second output of the stereo matrix (M) at which the R signal can be tapped is connected to the input of second buffer memory (S2).

36. Stereo radio receiver as claimed in any one of Claims 17 to 27 or 28 to 32, **characterised in that** the received signal is present at the antenna input (A) of a receiver unit (E) of which the output at which the stereo multiplex signal (MPX) can be tapped is connected to the input of an analogue-digital converter (W1) of which the output is connected to the input of a trigger generator (T) and a stereo decoder (D) of which the first output at which the L-R signal can be tapped is connected to the first audio input of the stereo matrix (M), whilst the second output thereof at which the L+R signal can be tapped is connected to the second audio input of the stereo matrix (M), that the output of the trigger generator (T) is connected to the control input of the stereo matrix (M) and an interpolation unit (I) connected to a first buffer memory (S1) and a second buffer memory (S2), that the first output of the stereo matrix (M) at which the L signal can be tapped is connected to the input of the first buffer memory (S1), and that the second output of the stereo matrix at which the R signal can be tapped is connected to the input of the second buffer memory (S2).

## Revendications

1. Procédé pour la suppression de perturbations dans le signal de réception d'un récepteur de radiodiffusion stéréo, procédé dans lequel un signal numérique L-R et un signal numérique L+R sont générés à partir d'un signal multiplex stéréo analogique (MPX) dans un décodeur stéréo (D) et un signal numérique L et un signal numérique R sont générés dans une matrice stéréo (M), un signal d'intensité de champ numérique (DF) représentant un signal d'intensité de champ analogique (AF) est généré et les valeurs de balayage du signal audio numérique sont générées par interpolation à partir des valeurs de balayage du signal audio numérique mémorisées au préalable au moins aussi longtemps que le signal d'intensité de champ numérique (DF) se trouve à l'extérieur d'une plage de tolérance pré-définissable, **caractérisé en ce qu'**une intensité de champ moyenne, à l'aide de laquelle la position de la plage de tolérance est définie, est déterminée par un calcul de la moyenne dans le temps du signal d'intensité de champ analogique ou numérique (AF, DF).

2. Procédé selon la revendication 1, **caractérisé en ce que** le signal d'intensité de champ numérique (DF) est généré par la numérisation du signal d'intensité de champ analogique (AF).

3. Procédé selon la revendication 1, **caractérisé en ce que** le signal d'intensité de champ numérique (DF) est généré à partir d'un signal numérique ZF de l'étage ZF du récepteur de radiodiffusion stéréo.

4. Procédé selon la revendication 1, **caractérisé en ce que** le signal d'intensité de champ numérique (DF) est dérivé du signal multiplex stéréo (MPX).

5. Procédé selon l'une quelconque des revendications 1 à 4, **caractérisé en ce que** le signal audio numérique est mémorisé temporairement dans au moins une mémoire temporaire (S1, S2).

6. Procédé selon la revendication 5, **caractérisé en ce que** le signal L-R et le signal L+R sont mémorisés temporairement chacun dans une mémoire temporaire (S1, S2) se trouvant entre le décodeur stéréo (D) et la matrice stéréo (M) ou le signal L et le signal R sont mémorisés temporairement chacun dans une mémoire temporaire (S1, S2) se trouvant derrière la matrice stéréo (M).

7. Procédé selon l'une quelconque des revendications 1 à 6, **caractérisé en ce qu'**un nombre prédéterminable de valeurs de balayage du signal audio se trouvant avant et/ou après l'intervalle d'interpolation déterminé par la plage de tolérance sont également remplacées par des valeurs de balayage interpolées.

8. Procédé selon l'une quelconque des revendications 1 à 7, **caractérisé en ce qu'**un générateur de déclenchement (T) génère un signal de déclenchement pour le marquage des valeurs de balayage du signal audio brouillées devant être remplacées par des valeurs de balayage interpolées lorsque le signal d'intensité de champ numérique (DF) se trouve à l'extérieur de la plage de tolérance.

9. Procédé selon l'une quelconque des revendications 1 à 8, **caractérisé en ce que** la durée du signal de déclenchement détermine la longueur de l'intervalle d'interpolation.

10. Procédé selon l'une quelconque des revendications 1 à 9, **caractérisé en ce que** l'interpolation est réalisée avec des polynômes de Lagrange.

11. Procédé selon la revendication 10, **caractérisé en ce que** (N+1)/2 valeurs de balayage sont prévues comme points avant et après l'intervalle d'interpolation lors de l'interpolation de M-valeurs de balayage avec un polynôme du N-ième degré.

12. Procédé selon l'une quelconque des revendications 1 à 11, **caractérisé en ce que** le signal L-R et le signal L+R sont mémorisés temporairement et **en ce que** le signal L+R et/ou le signal L-R sont interpolés.

13. Procédé selon l'une quelconque des revendications 1 à 11, **caractérisé en ce que** le signal L et le signal R sont mémorisés et interpolés.

14. Procédé selon l'une quelconque des revendications 1 à 11, **caractérisé en ce que** le récepteur stéréo est commuté entre une reproduction stéréo et une reproduction mono au moins pendant la durée de l'intervalle d'interpolation.

15. Procédé selon la revendication 14, **caractérisé en ce que** le récepteur stéréo est également commuté sur une reproduction mono pendant un intervalle de temps pré-définissable se trouvant avant ou après l'intervalle d'interpolation.

16. Procédé selon la revendication 14 ou 15, **caractérisé en ce que** la commutation entre la reproduction mono et la reproduction stéréo est réalisée avec une temporisation.

17. Récepteur de radiodiffusion stéréo avec
- une unité de réception (E) pour la génération d'un signal multiplex stéréo analogique (MPX), avec
- un décodeur stéréo (D) pour la génération d'un signal numérique L-R et du signal numérique L+R à partir du signal multiplex stéréo analogique (MPX), avec
- une matrice stéréo (M) pour la génération d'un signal numérique L et d'un signal numérique R à partir du signal numérique L-R et du signal numérique L+R, avec
- des moyens pour la génération d'un signal d'intensité de champ numérique (DF) représentant un signal d'intensité de champ analogique (AF) de telle sorte que les valeurs de balayage du signal audio numérique peuvent être générées par interpolation au moins aussi longtemps que le signal d'intensité de champ numérique (DF) se trouve à l'extérieur d'une plage de tolérance pré-définissable,
**caractérisé en ce que** la position de la plage de tolérance est définie par une intensité de champ moyenne déterminée par un calcul de la moyenne dans le temps du signal d'intensité de champ analogique ou numérique (AF, DF).

18. Récepteur de radiodiffusion stéréo selon la revendication 17, qui comporte en outre un convertisseur analogique-numérique pour la génération du signal d'intensité de champ numérique (DF) par la numérisation du signal d'intensité de champ analogique (AF).

19. Récepteur de radiodiffusion stéréo selon la revendication 17, dans lequel il est prévu une génération du signal d'intensité de champ numérique (DF) à partir d'un signal numérique ZF de l'étage ZF du récepteur de radiodiffusion stéréo.

20. Récepteur de radiodiffusion stéréo selon la revendication 17, dans lequel il est prévu une génération du signal d'intensité de champ numérique (DF) à partir du signal multiplex stéréo (MPX).

21. Récepteur de radiodiffusion stéréo selon l'une quelconque des revendications 17 à 20, dans lequel il est prévu une mémorisation temporaire du signal audio numérique dans au moins une mémoire temporaire (S1, S2).

22. Récepteur de radiodiffusion stéréo selon la revendication 21, dans lequel il est prévu une mémorisation temporaire du signal L-R et du signal L+R chacun dans une mémoire temporaire (S1, S2) respective se trouvant entre le décodeur stéréo (D) et la matrice stéréo (M) ou une mémorisation temporaire du signal L et du signal R chacun dans une mémoire temporaire (S1, S2) respective se trouvant derrière la matrice stéréo (M).

23. Récepteur de radiodiffusion stéréo selon l'une quelconque des revendications 17 à 22, dans lequel il est prévu de remplacer un nombre de valeurs de balayage du signal audio se trouvant avant et/ou après l'intervalle d'interpolation déterminé par la plage de tolérance par des valeurs de balayage interpolées.

24. Récepteur de radiodiffusion stéréo selon l'une quelconque des revendications 17 à 23, **caractérisé en ce qu'**il est prévu un générateur de déclenchement (D) pour la génération d'un signal de déclenchement qui est prévu pour le marquage des valeurs de balayage du signal audio devant être remplacées par des valeurs de balayage interpolées lorsque le signal d'intensité de champ numérique (DF) se trouve à l'extérieur de la plage de tolérance.

25. Récepteur de radiodiffusion stéréo selon l'une quelconque des revendications 17 à 24, dans lequel il est prévu que la durée du signal de déclenchement détermine la longueur de l'intervalle d'interpolation.

26. Récepteur de radiodiffusion stéréo selon l'une quelconque des revendications 17 à 25, dans lequel l'interpolation est réalisée avec des polynômes de Lagrange.

27. Récepteur de radiodiffusion stéréo selon la revendication 26, **caractérisé en ce que** (N+1)/2 valeurs de balayage sont prévues comme points avant et après l'intervalle d'interpolation lors de l'interpolation de M-valeurs de balayage avec un polynôme du N-ième degré.

28. Récepteur de radiodiffusion stéréo selon l'une quelconque des revendications 17 à 27, dans lequel il est prévu une mémorisation temporaire du signal L-R et du signal L+R et une interpolation du signal L+R et/ou du signal L-R.

29. Récepteur de radiodiffusion stéréo selon l'une quelconque des revendications 17 à 27, dans lequel il est prévu une mémorisation temporaire et une interpolation du signal L et du signal R.

30. Récepteur de radiodiffusion stéréo selon l'une quelconque des revendications 17 à 27, dans lequel il est prévu une commutation du récepteur stéréo entre une reproduction stéréo et une reproduction mono au moins pendant la durée de l'intervalle d'interpolation.

31. Récepteur de radiodiffusion stéréo selon la revendication 30, dans lequel il est prévu une commutation du récepteur stéréo sur une reproduction mono pendant un intervalle de temps pré-définissable avant et/ou après l'intervalle d'interpolation.

32. Récepteur de radiodiffusion stéréo selon la revendication 30 ou 31, **caractérisé en ce que** la commutation entre la reproduction mono et la reproduction stéréo est prévue avec une temporisation.

33. Récepteur de radiodiffusion stéréo selon l'une quelconque des revendications 17 à 28 ou 30 à 32, **caractérisé en ce que** le signal de réception se trouve à l'entrée d'antenne (A) d'une unité de réception (E) dont la première sortie, au niveau de laquelle le signal multiplex stéréo analogique (MPX) peut être prélevé, est raccordée à l'entrée d'un premier convertisseur analogique-numérique (W1) et dont la seconde sortie, au niveau de laquelle le signal analogique d'intensité de champ (AF) peut être prélevé, est raccordée à l'entrée d'un second convertisseur analogique-numérique (W2), **en ce que** la sortie du premier convertisseur analogique-numérique (W1) est raccordée à l'entrée du décodeur stéréo (D) dont la première sortie, au niveau de laquelle le signal L-R peut être prélevé, est raccordée à l'entrée d'une première mémoire temporaire (S1) alors que sa seconde sortie, au niveau de laquelle le signal L+R peut être prélevé, est raccordée à l'entrée d'une seconde mémoire temporaire (S2), **en ce que** les sorties des première et seconde mémoires temporaires (S1, S2) sont raccordées aux deux entrées audio de la matrice stéréo (M) au niveau des sorties de laquelle le signal L et le signal R peuvent être prélevés, **en ce que** la sortie du second convertisseur analogique-numérique (W2) est raccordée à l'entrée d'un générateur de déclenchement (T) et **en ce que** la sortie du générateur de déclenchement (T) est raccordée à l'entrée de commande de la matrice stéréo (M) et à une unité d'interpolation (I) raccordée à la seconde mémoire temporaire (S2).

34. Récepteur de radiodiffusion stéréo selon l'une quelconque des revendications 17 à 28 ou 30 à 32, **caractérisé en ce que** le signal de réception se trouve à l'entrée d'antenne (A) d'une unité de réception (E) dont la sortie, au niveau de laquelle le signal multiplex stéréo analogique (MPX) peut être prélevé, est raccordée à l'entrée d'un convertisseur analogique-numérique (W1) dont la sortie est raccordée à l'entrée d'un générateur de déclenchement (T) et à l'entrée du décodeur stéréo (D) dont la première sortie, au niveau de laquelle le signal L-R peut être prélevé, est raccordée à l'entrée d'une première mémoire temporaire (S1) alors que sa seconde sortie, au niveau de laquelle le signal L+R peut être prélevé, est raccordée à l'entrée d'une seconde mémoire temporaire (S2), **en ce que** les sorties des première et seconde mémoires temporaires (S1, S2) sont raccordées aux deux entrées audio de la matrice stéréo (M) au niveau des sorties de laquelle le signal L et le signal R peuvent être prélevés, et **en ce que** la sortie du générateur de déclenchement (T) est raccordée à l'entrée de commande de la matrice stéréo (M) et à une unité d'interpolation (I) raccordée à la seconde mémoire temporaire (S2).

35. Récepteur de radiodiffusion stéréo selon l'une quelconque des revendications 17 à 27 ou 29 à 32, **caractérisé en ce que** le signal de réception se trouve à l'entrée d'antenne (A) d'une unité de réception (E) dont la première sortie, au niveau de laquelle le signal multiplex stéréo analogique (MPX) peut être prélevé, est raccordée à l'entrée d'un premier convertisseur analogique-numérique (W1) et dont la seconde sortie, au niveau de laquelle le signal analogique d'intensité de champ (AF) peut être prélevé, est raccordée à l'entrée d'un second convertisseur analogique-numérique (W2), **en ce que** la sortie du premier convertisseur analogique-numérique (W1) est raccordée à l'entrée du décodeur stéréo (D) dont la première sortie, au niveau de laquelle le signal L-R peut être prélevé, est raccordée à la première entrée audio de la matrice stéréo (M) alors que sa seconde sortie, au niveau de laquelle le signal L+R peut être prélevé, est raccordée à la seconde entrée audio de la matrice stéréo (M), **en ce que** la sortie du second convertisseur analogique-numérique (W2), au niveau de laquelle le signal numérique d'intensité de champ (DF) peut être prélevé, est raccordée à l'entrée d'un générateur de déclenchement (T) dont la sortie est raccordée à l'entrée de commande de la matrice stéréo (M) et à l'entrée de commande d'une unité d'interpolation (I) raccordée à une première mémoire temporaire (S1) et à une seconde mémoire temporaire (S2), et **en ce que** la première sortie de la matrice stéréo (M,) au niveau de laquelle le signal L peut être prélevé, est raccordée à l'entrée de la première mémoire temporaire (S1) et la seconde sortie de la matrice stéréo (M), au niveau de laquelle le signal R peut être prélevé, est raccordée à l'entrée de la seconde mémoire temporaire (S2).

36. Récepteur de radiodiffusion stéréo selon l'une quelconque des revendications 17 à 27 ou 29 à 32, **caractérisé en ce que** le signal de réception se trouve à l'entrée d'antenne (A) d'une unité de réception (E) dont la sortie, au niveau de laquelle le signal multiplex stéréo analogique (MPX) peut être prélevé, est raccordée à l'entrée d'un convertisseur analogique-numérique (W1) dont la sortie est raccordée à l'entrée d'un générateur de déclenchement (T) et du décodeur stéréo (D) dont la première sortie, au niveau de laquelle le signal L-R peut être prélevé, est raccordée à la première entrée audio de la matrice stéréo (M) alors que sa seconde sortie, au niveau de laquelle le signal L+R peut être prélevé, est raccordée à la seconde entrée audio de la matrice stéréo (M), **en ce que** la sortie du générateur de déclenchement (T) est raccordée à l'entrée de commande de la matrice stéréo (M) et à une unité d'interpolation (1) raccordée à une première mémoire temporaire (S1) et une seconde mémoire temporaire (S2), **en ce que** la première sortie de la matrice stéréo (M), au niveau de laquelle le signal L peut être prélevé, est raccordée à l'entrée de la première mémoire temporaire (S1) et **en ce que** la seconde sortie de la matrice stéréo, au niveau de laquelle le signal R peut être prélevé, est raccordée à l'entrée de la seconde mémoire temporaire (S2).
